# EUROPEAN PATENT APPLICATION

(11) **EP 3 731 546 A1**
(43) Date of publication of application: **28.10.2020**
(21) Application number: 18891454.3
(22) Date of filing: 23.11.2018
(51) Int. Cl.: H04W 4/33

(54) **TARGET OBJECT POSITIONING SYSTEM AND POSITIONING METHOD**

(30) Priority: 18.12.2017 CN 201711366390; 26.01.2018 CN 201810079535
(71) Applicant: Shanghai Cloudpick Smart Technology Co., Ltd., Shanghai 200126 (CN)
(72) Inventor: FENG, Linan, Shanghai 200126 (CN); XIA, Ding, Shanghai 200126 (CN); MA, Jieyu, Shanghai 200126 (CN); LI, Tingtao, Shanghai 200126 (CN); WU, Wenyao, Shanghai 200126 (CN); ZHANG, Yimei, Shanghai 200126 (CN)
(74) Representative: Abel & Imray
(86) International application number: PCT/CN2018/117325
(87) International publication number: WO 2019/120040

(57) **Abstract**

The disclosure provides a target positioning system and a target positioning method. The target positioning system comprises: a closed space; a three-dimensional, 3D, image acquisition device for acquiring at least one frame of 3D image in real time, wherein the 3D image comprises all or part of images of at least one target object; and a target coordinate acquisition unit in a data processing equipment, for establishing a 3D coordinate system in the closed space, and acquiring coordinates or a group of coordinates of the target object in the 3D coordinate system in real time according to the at least one frame of 3D image.

## Description

### FIELD

The disclosure relates to a user real-time tracking technology for retail industry, particularly, a target positioning system and a target positioning method.

### BACKGROUND

In the traditional shopping mode of the retail industry, every supermarket or convenience store needs specialized salesmen and cashiers, and the labor cost is high. With the development of electronic payment technology, identity recognition technology and cloud computing technology, unmanned supermarket projects have high feasibility in technology. In the unmanned supermarket project, a basic problem to be solved urgently is the determination and record problem of the goods selected and purchased by the user, and specifically, the server needs to accurately determine which goods are selected, put back and taken away from the supermarket by each user.

In the prior art, some adopt a human face technology to identify user identities, and the type and the quantity of commodities purchased by a user are determined according to RFID tags of goods carried on the body when each user leaves a supermarket, so that the RFID tags need to be set on each item, and an RFID reader-writer is arranged at an entrance guard. The scheme does not need to track the real-time position of a user, and has the defects that firstly, the hardware cost is high, the price of each RFID tag is about 0.5-1 yuan, the tag increases the cost of each commodity, reduces the competitiveness of a supermarket, and for goods with the cost of 5 yuan, additionally setting the RFID tag increases the cost of the goods by 10-20%; secondly, there is the possibility that the goods are shielded and removed in the goods perception, so that the phenomenon that the RFID reader is shielded by a user occurs, and results in the loss of the goods; and thirdly, the settlement can be realized only at the supermarket entrance guard, and if the user eats the edible goods before leaving the store and leaves the package in the supermarket, the RFID reader cannot sense and determine the real consumption amount of the user. That is, the scheme highly depends on the self-discipline and morality of citizen users, and is not restricted by technical means, thereby the risk in the unmanned supermarket business process is high.

The applicant of the present disclosure proposes a method for determining whether or not goods are taken away or put back on a shelf in real time based on a weight monitoring technique or an image monitoring technique, and at the same time, it needs to solve the problem of determining the identity of a user who takes away or puts back goods.

### SUMMARY

The disclosure aims to provide a target positioning system and a target positioning method, which effectively solve the technical problems in the prior art that the target object cannot be positioned and tracked in real time and the identity of a user who takes away or puts back goods in an unmanned supermarket is not clear.

To achieve the above aims, the disclosure provides a target positioning system, including: a closed space; a 3D image acquisition device for acquiring at least one frame of 3D image in real time, where the 3D image comprises all or part of images of at least one target object; and the target coordinate acquisition unit in data processing equipment, for establishing a 3D coordinate system in the closed space, and acquiring coordinates or a group of coordinates of the target object in the 3D coordinate system in real time according to the at least one frame of 3D image.

To achieve the above aims, the disclosure provides a target positioning method, including: a space setting step for setting a closed space; a 3D image acquisition step for acquiring at least one frame of 3D image in real time, wherein the 3D image comprises all or part of images of at least one target object; and a target coordinate acquisition step for establishing a 3D coordinate system in the closed space, and acquiring coordinates or a group of coordinates of the target object in real time according to the at least one frame of 3D image.

The disclosure has the advantages of providing a target positioning system and a positioning method, which can acquire the real-time position of a specific target object in a specific area, particularly can obtain the real-time position of each user in an unmanned supermarket, and can accurately determine the identity of the user who takes away or puts back good from or on the shelf by combining the position of each rack or each item of goods and the picking and placing states of each item on the shelf, thereby updating the shopping record of the user so as to realize automatic settlement after the user finishes shopping.

### BRIEF DESCRIPTION OF THE DRAWINGS

FIG. 1 is a top view of an unmanned supermarket according to an example of the disclosure;
FIG. 2 is a schematic structural view of a tray and a rack according to an example of the disclosure;
FIG. 3 is a schematic view of the overall structure of the shelf according to an example of the disclosure;
FIG. 4 is a block diagram of a user identification system according to an example of the disclosure;
FIG. 5 is a block diagram of a target locating system according to an example of the disclosure;
FIG. 6 is a diagram illustrating a distribution of an image sensor in a closed space according to an example of the disclosure;
FIG. 7 is a block diagram of a goods perception system based on weight monitoring according to an example of the disclosure;
FIG. 8 is a block diagram of the goods perception system based on image monitoring according to an example of the disclosure;
FIG. 9 is a diagram illustrating a positional relationship between the second camera and the shelf according to an example of the disclosure;
FIG. 10 is a block diagram of a shopping user determination system according to an example of the disclosure;
FIG. 11 is a block diagram of a shopping database system according to an example of the disclosure;
FIG. 12 is a block diagram of a settlement system according to an example of the disclosure.
FIG. 13 is a flowchart of a target locating method according to an example of the disclosure;
FIG. 14 is a flowchart illustrating a 3D image capturing process according to an example of the disclosure;
FIG. 15 is a flowchart illustrating a target coordinate acquiring step according to an example of the disclosure;
FIG. 16 is a flowchart illustrating a position parameter obtaining step according to an example of the disclosure;
FIG. 17 is a flowchart of another method for locating a target object according to an example of the disclosure;
FIG. 18 is a flowchart illustrating a shopping user determination step according to an example of the disclosure;
FIG. 19 is a flowchart illustrating a shopping information recording step according to an example of the disclosure.

Reference numerals in the drawings are listed below:
1 closed space; 2 shelf; 3 support; 4 trays; 5 rack; 6 weight sensing device; 7 data processing equipment;
100 user identification system; 101 access control device; 102 identification device; 1021 scanning device; 1022 identity acquisition unit; 103 user entrance; 104 user exit;
200 target positioning system; 201 3D image acquisition device; 202 3D image integration unit; 203 target coordinate acquisition unit;
2011 image sensor; 2012 depth image sensor; 2013 RGB image sensor; 2014 3D image acquisition unit;
300 goods perception system based on weight monitoring; 301 goods database generation unit; 302 weight acquisition unit; 303 pick or place status judgment unit; 304 goods database updating unit;
3011 initialization unit; 3012 information input unit; 3013 value initialization unit;
3031 weight difference calculation unit; 3032 weight difference judgment unit; 3033 rack information recording unit; 3034 goods type determining unit; 3035 goods quantity calculation unit;
400 goods perception system based on image monitoring; 401 sample acquisition unit;
402 model training unit; 403 real-time image acquisition unit; 404 goods category acquisition unit; 405 first camera; 406 second camera;
500 shopping user judgement system; 501 goods information storage unit; 502 rack coordinate storage unit; 503 rack-to-user matching judgment unit; 504 goods-to-user matching judgment unit;
600 shopping database system; 601 shopping database generation unit; 602 shopping database update unit;
700 settlement system; 701 total amount calculation unit; 702 payment unit.

### DETAILED DESCRIPTION

Preferred embodiments of the present disclosure will be described in detail below with reference to the accompanying drawings, so that the technical contents thereof will be clear and understood. The disclosure may be embodied in many different forms and should not be construed as limited to the embodiments set forth herein. In the drawings, elements having the same structure are denoted by the same reference numerals, and elements having similar structures or functions are denoted by similar reference numerals.

When an element is referred to as being "on" another element, it can be directly on the other element; there may also be an intermediate element, the element being disposed on the intermediate element and the intermediate element being disposed on the other element. When an element is referred to as being "mounted to" or "connected to" another element, it is to be understood that the element is directly "mounted to" or "connected to" the other element or that the element is indirectly "mounted to" or "connected to" the other element through an intermediate element.

The example of the disclosure relates to a target positioning system which is a part of an unmanned vending system of an unmanned supermarket, where a plurality of image acquisition devices are arranged at the top of the space of the unmanned supermarket, thereby the real-time position of a target object (a shopping user) in the space of the unmanned supermarket is acquired, and effective tracking is realized.

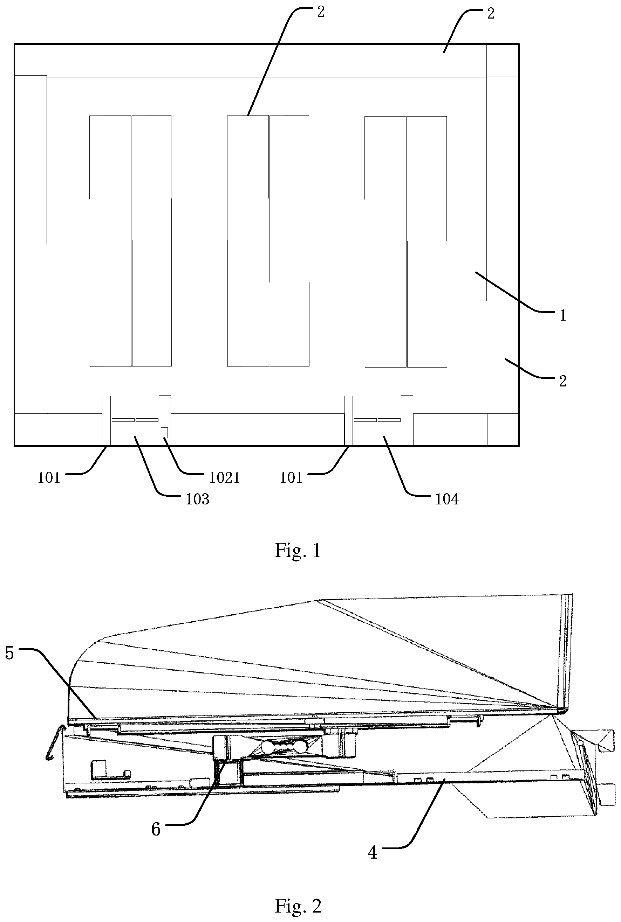

Referring to FIGS. 1 to 3, the unmanned vending system includes a closed space 1, in which a plurality of shelves 2 are disposed, each shelf 2 includes a support 3 and a plurality of trays 4 detachably mounted on the support 3, and the plurality of trays 4 are parallel to each other at different heights or are flush with each other at the same height. Each tray 4 is provided with a plurality of racks 5 set in parallel, and at least one kind of goods is placed on each rack 5. The goods placed on the rack 5 of the present example are required to be easily taken out or put back by the user, and thus, the end of the rack 5 facing the user is used as the front end of the rack 5.

A weight sensing device 6, e.g., a rectangular weight sensor, is set between each rack 5 and tray 4, with a lower surface of one end connected to the tray 4 and an upper surface of the other end connected to the rack 5. In this example, each rack 5 is an open box body, and can be placed with one or more kinds of goods, the goods are standard goods, and the appearance and weight of the same kind of goods are the same or similar. The same kind of goods placed on the same rack 5 have the same weight value, different kinds of goods have different weight values, and each weight value only corresponds to one kind of goods. The weight sensing device 6 can accurately acquire the real-time weight sensing values of the racks 5 and goods on the upper surfaces of the racks 5, and accurately sense every variation of the weight value of each rack 5, including the increment or the decrement.

The example further includes a data processing equipment 7, such as a server or a computer, and the data processing equipment 7 is provided with a plurality of data processing software, has a plurality of functional modules, and can be connected to a plurality of hardware through data lines, so as to implement a plurality of functions in a manner of combining the software and the hardware.

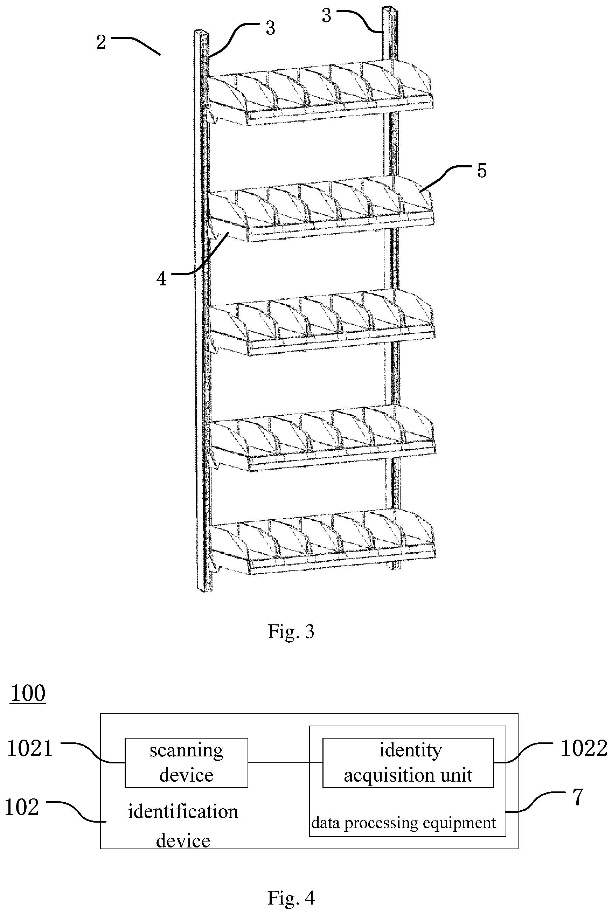

Referring to FIGS. 1 and 4, the example further includes a user identification system 100 for identifying the identity information of each user. The user identification system 100 includes an access control device 101 and an identification device 102. In this example, the closed space 1 is not an absolutely sealed space, but a relatively closed space, and the closed space 1 is provided with an access, e.g., a user entrance 103 and a user exit 104, where all users enter the closed space 1 through the user entrance 103 and leave the closed space 1 through the user exit 104.

Referring to FIGS. 1 and 4, each entrance and exit of the closed space 1 are provided with an access control device 101, e.g., an automatic door. The identification device 102 is used for acquiring the identity information of the user, and comprises a scanning device 1021 connected to the data processing equipment 7 and an identity acquisition unit 1022 in the data processing equipment 7. The scanning device 1021 is disposed inside or outside the access control device 101 at the user entrance 103, e.g., disposed on the outer surface of the automatic gate, and is used for scanning the identification code, e.g., a two-dimensional code; the identity acquisition unit 1022 is a functional module in the data processing equipment 7, and can acquire the identity information of the user according to the identity identification code. The access control device 101 at the exit 104 does not need to be provided with the identification device 102.

In this example, each user downloads a dedicated application software (APP) which matches an unmanned supermarket to a mobile communication terminal (a mobile phone, a tablet computer, or the like), registers an account in the application software (APP), and associates the account with payment software; or each user downloads payment software (such as WeChatPay/AliPay) into the mobile communication terminal, a small program which matches the unmanned supermarket is embedded into the payment software, an account is registered in the payment software, and user registration information and electronic payment information including user identity information, bank account information, payment passwords and the like are set in the special application software (APP) or the payment software. After the registration is completed, the user identity information will be stored in the user database of the data processing equipment 7.

Application software (APP) in the mobile communication terminal may generate a two-dimensional code, the two-dimensional code stores the identity information of the user, etc. When a certain user needs to enter the closed space 1 from the outside, the two-dimensional code generated by the application software is directly opposite to the scanning end of the scanning device 1021, the scanning device 1021 decodes the two-dimensional code after code scanning, and transmits the decoding to the data processing equipment 7. If the two-dimensional code is identifiable and the identified identity information matches the identity information stored in the user database in advance, it is determined that the user identity is legal, the access control device 101 is open to allow the user to enter the closed space 1. The access control device 101 at the user entrance 103 is provided with a sensing device, such as an infrared sensor, and when the user enters the closed space 1, the access control device 101 senses that someone has passed the access control and then automatically closes. When the user finishes shopping and needs to leave the closed space 1, the access control device 101 at the exit 104 senses that someone approaches the access control device 101 from the inside of the closed space 1, the access control device can be automatically opened, and after the user leaves the closed space 1, the access control device 101 senses that someone passed the access control device and then automatically closes.

After the identity acquisition unit 1022 obtains the identity information of the user according to the identity identification code, the data processing equipment 7 may generate a shopping database of the user, and obtain shopping information to update the shopping database according to each shopping behavior of the user during the shopping process of the user. Because the mobile communication terminal carried by the user carries out real-time data exchange with the data processing equipment 7 through the application software (APP), the shopping database of the user can also be displayed in the application software (APP) in the mobile communication terminal to form a shopping cart interface, so that the user can know the shopping record and subsequent settlement of the user.

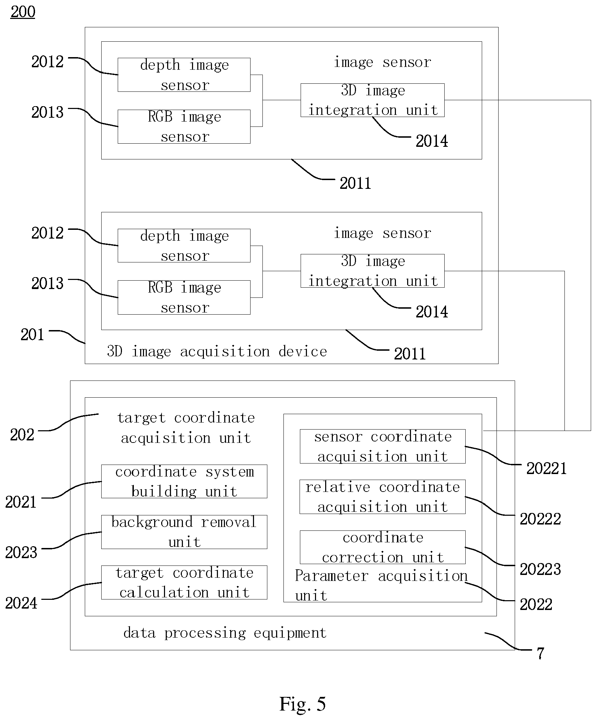

Referring to FIG. 4 and FIG. 5, the target positioning system 200 of the present example includes a closed space 1, a 3D image acquisition device 201, a 3D image acquisition unit 202 and a target coordinate acquisition unit 203, which are used to acquire the real-time position of each target in the closed space 1. The target object in this example is all or part of the user and its extension, and the target positioning system 200 is the user positioning system, and is used to obtain the position of the whole or part (such as the head, the hand, etc.) of the user, that is, the group of coordinates in a 3D coordinate system.

The 3D image acquisition device 201 includes at least one image sensor 2011 for capturing at least one frame of 3D image in real time. The plurality of the image sensors 2011 are evenly distributed at the top of the closed space 1, the lenses of the image sensors 2011 face downwards, and the central axes of the lenses can be perpendicular to the horizontal plane or have a certain inclination angle. The field of view of the lenses of the image sensors 2011 covers the entire bottom surface of the closed space 1. When a user moves or does shopping in an unmanned supermarket, the user may be always under the monitoring of the image sensor. The 3D image acquired by the image sensor comprises a user image, and the user image refers to a picture of the whole or part of the body and the extension part of the user. If no one is in the closed space, the 3D image at each moment is the same as the previous moment, and the 3D image at the moment can be determined to be the background without any user images.

Each image sensor 2011 comprises a depth image sensor 2012 and an RGB image sensor 2013 which are set in parallel, and a 3D image integration unit 2014, wherein the depth image sensor 2012 continuously acquires a plurality of frames of depth images; the RGB image sensor 2013 continuously collects a plurality of frames of RGB images, and the 3D image integration unit 2014 combines a frame of depth image and a frame of RGB image collected by the same image sensor 201 at the same time into a frame of 3D image.

The above two sensors acquire synchronously (simultaneously, and the acquisition frequency is the same), the image sensor 2011 can acquire RGB images and depth images with the same number of frames per second, and the 3D image integration unit 2014 can continuously acquire a plurality of frames of 3D images per second and transmit the 3D images to the target coordinate acquisition unit 202 of the data processing equipment 7.

The target coordinate acquisition unit 202 is a functional module in the data processing equipment 7, establishes a 3D coordinate system in the closed space, and obtains coordinates or a group of coordinates of the user in the 3D coordinate system in real time according to the continuous multi-frame 3D images including the user images. The target coordinate acquisition unit 202 includes a coordinate system building unit 2021, a parameter acquisition unit 2022, a background removal unit 2023, and a target coordinate calculation unit 2024.

The coordinate system building unit 2021 establishes the 3D coordinate system in the closed space 1, e.g., by selecting a center point of a bottom surface (a ground surface of an unmanned supermarket) of the closed space as an origin of the coordinate system, and setting an X axis and a Y axis in a horizontal direction and a Z axis in a vertical direction.

Because all or part of the body of the user occupies a larger space in the 3D coordinate system, the position of the user can be represented by a group of coordinates. To accurately control and conveniently calculate the position, the position of the user may also be represented by the coordinates of a specific point in the group of coordinates, for example, the position of the user can be represented by the coordinates of the highest point (the point having the largest Z-axis numerical value) in the group of coordinates of the user.

The parameter acquisition unit 2022 processes the continuous multi-frame 3D images including the user images, and obtains the position parameters and the color parameters of each pixel point of each frame of 3D image; the position parameters are x, y and z, and represent the coordinates of the position of the pixel point under the 3D coordinate system; the color parameters are r, g and b, and respectively represent the intensities of the three primary colors of the pixel point. When a user moves into the field of view of any image sensor, the data processing equipment 7 may acquire a plurality of frames of 3D images, each frame of 3D image includes a user image and a background image, and each pixel may be a part of the user or a part of the background.

In the 3D images acquired by different image sensors, pixel points which represent the same positions of the user body and the extension parts thereof are the same in color parameters r, g and b. Because the distances between the image sensors at different positions and the user are different, the primary position parameters directly acquired by each image sensor are the position coordinates of a point on the body of the user and the extension part thereof relative to the image sensor, so a coordinate transformation is required to convert the primary position parameters acquired by the image sensors at different positions into the position parameters under the 3D coordinate system established in the closed space.

The parameter acquisition unit 2022 includes a sensor coordinate acquisition unit 20221, a relative coordinate acquisition unit 20222, and a coordinate correction unit 20223. The sensor coordinate acquisition unit 20221 acquires coordinates of a center point of an image sensor that acquires the frame of 3D image (e.g., a midpoint of a connecting line between the center points of the lenses of the depth image sensor 2012 and the RGB image sensor 2013 arranged in parallel) in the 3D coordinate system established in the closed space; the relative coordinate acquisition unit 20222 establishes a second 3D coordinate system by taking the central point of the image sensor as a second origin, wherein the directions of the X axis, the Y axis and the Z axis of the second 3D coordinate system are the same as the 3D coordinate system, and acquires the coordinates of each pixel point in the second 3D coordinate system from the 3D image; the coordinate correction unit 20223 is configured to calculate and correct the coordinates of each pixel of the 3D image in the 3D coordinate system according to the coordinates of the image sensor center point in the 3D coordinate system and the coordinates of each pixel of the 3D image in the second 3D coordinate system, so as to obtain the position parameters of each pixel of the user and the extension portion thereof.

In continuously collected M frames of 3D images, each frame of 3D image comprises and only comprises an image of a user, if the color parameters of N pixel points which belong to different 3D images and have the same position parameters are the same, and N is greater than 0.9^{∗}M and less than or equal to M, a background removal unit 2023 determines that the N pixel points are background pixel points, and removes N background pixel points from the M frames of 3D images to obtain M frames of background-free 3D images, namely the image of the user. In the continuously acquired 3D images, if the color parameters of the pixel points which belong to different 3D images and have the same position parameters are all the same, or most of these color parameters (such as 90%) are the same, the position of the pixel point can be determined as the background, so that the pixel point can be removed from the corresponding 3D image.

In the target coordinate calculation unit 2024, if the target object is the whole of the user and the extension portion thereof, the set of the position parameters of all the pixel points in the M frames of the background-free 3D image are the group of coordinates of the whole of the user and the extension portion thereof; in the group of coordinate, the position parameters of the pixel point with the largest parameter z is defined as the coordinates of the user. In the continuously acquired 3D images, after background pixel points are removed, the remaining pixel points can represent the whole travel track of the user. If each frame of 3D image in the continuously acquired M frames of 3D images comprises images of a plurality of users, a 3D image which only comprises all or part of one user needs to be extracted from each of the M frames of 3D images.

If the target object is a part of the user and its extension, a group of coordinates of the part of the user, such as the head, shoulder, elbow, wrist, hand, etc., may be obtained. The depth image sensor 2012 and the RGB image sensor 2013 are respectively provided with a lens, the lens of the depth image sensor 2012 and the lens of the RGB image sensor 2013 are set in parallel and adjacent to each other, and if the central axes of the two lenses are set to be perpendicular to the horizontal plane, the two lenses overlook goods and users in the closed space. Normally, the two lenses can capture the group of coordinates of the head and the shoulder of the user, and when the user stretches out the hand, the group of coordinates of the arm, the elbow, the wrist and the hand of the user can be captured. If the head, the shoulder, the elbow, the wrist and the hand of the user at a certain moment are all connected into a fold line or a curve, the corresponding relation between the hand and the head position of the user can be established, namely, the position of a certain hand can be acquired in real time, and meanwhile, which user the hand belongs to can be determined.

Further, the field of view of the image sensor 2011 may cover a partial space outside the doorway, and when the user is outside the doorway, the image of the user may be acquired by the image sensor 2011. All processes of using the unmanned vending system by the user include an identity identification process at an entrance and an exit, a process of entering the closed space 1, a process of walking or staying in the closed space 1 and a process of leaving the closed space 1, and all the processes are under the monitoring of the image sensor 2011, so that the real-time position of a certain user with a known identity and a part of the body of the user in the closed space 1 can be monitored in real time. When the scanning device 1021 reads the two-dimensional code of the user, the data processing equipment 7 can obtain the identity information of the user, and the image sensor 2011 starts to track the position of the user in real time from the time when the scanning device 1021 reads the code, so as to monitor whether the user matches a certain shelf. When the image sensor 2011 cannot acquire the real-time 3D image of the user, it can be identified that the user ends shopping and then settlement is performed.

The example further comprises a goods perception system for sensing the picking and placing states of each goods in real time, and when any kind of goods is taken away or placed back, the type and the quantity of the taken away or placed back goods are obtained. The taking and placing states comprise a goods standing state, a taken-away state and a placed-back state. In this example, the goods perception system may use two different methods.

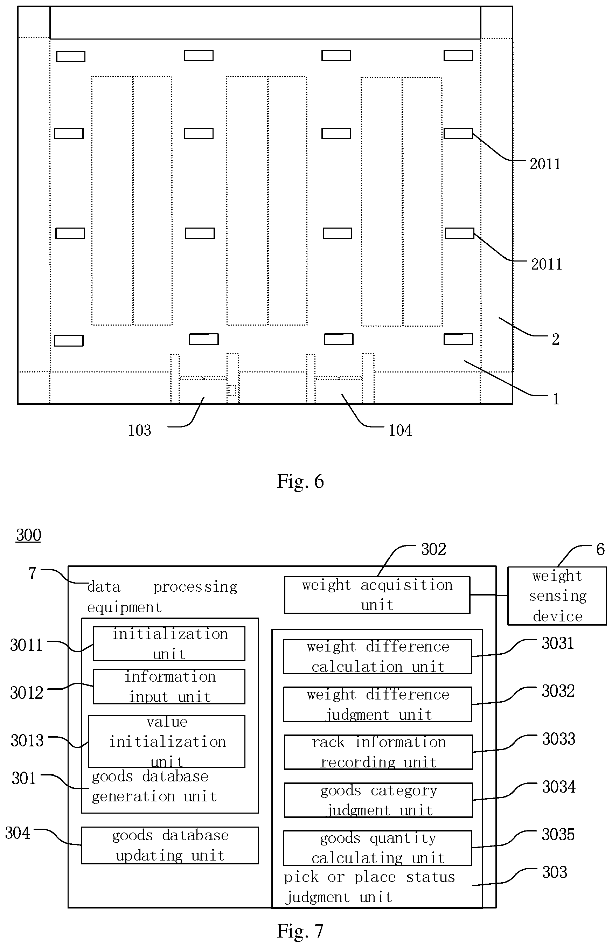

Referring to FIG.7, the example further includes a goods perception system 300 based on weight monitoring for sensing the picking and placing states of each kind of goods in real time, wherein the picking and placing states include a goods standing state, a taken-away state and a put-back state.

The goods perception system based on weight monitoring 300 includes a goods database generation unit 301, a weight acquisition unit 302, a pick or place status judgment unit 303, and a goods database updating unit 304. The four units are functional modules in the data processing equipment 7, and work together with the shelf 2 provided with the weight sensing device 6, so that the real-time weight sensing value of each rack 5 can be monitored, and whether goods are taken away or put back can be determined. When any kind of goods is removed or replaced, the goods perception system based on weight monitoring 300 obtains the type and the quantity of the removed or replaced goods.

The goods database generation unit 301 is used for generating a goods database; the goods database comprises goods information of each goods and a weight sensing value of each rack for placing the goods, wherein the goods information comprises the type of the goods, the weight value of a single product, the rack number and the shelf number corresponding to the goods, the serial number of the goods, the name, the model, the net content, the unit price and the like.

The goods database generation unit 301 includes an initialization unit 3011, an information input unit 3012, and a value initialization unit 3013. The initialization unit 3011 is configured to perform initialization processing on the goods database, and establish the goods database in the memory of the data processing equipment 7. The information input unit 3012 is used for entering the weight value and the goods information of each item, storing the weight value and the goods information in the goods database, and the weight value of each kind of goods on the shelf of the unmanned supermarket is entered in the goods database by using a keyboard or a code scanner. The value initializing unit 3013 is configured to collect the weight sensing value of each rack after the goods are placed thereon, and store the weight sensing value in the goods database.

In the unmanned supermarket arranging process, for example, after a plurality of goods of the same kind and weight are placed on each rack 5, the goods information is entered into the data processing equipment 7 and stored in the goods database. Taking a certain brand of beverage as an example, eight bottles of a certain brand of beverage are placed on a certain rack, the weight of the rack is 100 g, the weight of each bottle of beverage is 200 g, the weight sensing value of the rack in the goods database after initialization is 1700 g, and information such as a product name (certain herbal tea), a net content (195 ml), a producing area (Guangdong), a unit price (5 yuan), a single product weight value (200 g), a shelf number (1), rack numbers (1-12), a goods number (025) and the like corresponding to the brand of beverage are also stored in the goods database.

The weight acquisition unit 302 is respectively connected to the weight sensing device 6 in each rack 5 through data lines to collect the real-time weight sensing value of each rack 5 in real time, for example, the collecting time interval is 0.1-0.2 seconds. The real-time weight sensing value is a sensing value of the weight sensor and represents the weight of each rack before goods are placed on the racks 5; after the goods are placed on the rack 5, it represents the total weight value of the rack and the goods on the rack; and the real-time weight sensing value changes when goods are taken away or put back to the shelf 5.

In order to reduce errors, before the goods are placed on the rack 5 formally, calibration processing needs to be performed first, and the corresponding relation between the sensing value X of the weight sensor and the actual weight value Y of the goods placed above the rack is calculated by using standard balancing weights with different weights. For example, the rack is firstly placed in the empty state, the sensing value X0 of the weight sensing device 6 (weight sensor) is obtained, and at the moment, the weight Y0 =0; then standard balancing weights with weight values of 500 g and 1000 g are respectively placed on the racks to obtain the sensing values X1 and X2 of the weight sensing device 6 (weight sensor), and the corresponding goods weights Y1=600g and the corresponding goods weights Y2 = 1000g. Using the formula Y (weight value of the goods) =k ^{∗} X (sensor value) + b, the values of the three sets of parameters k, b are calculated and stored, and the set of parameters in which the deviation is small is selected. In the subsequent real-time monitoring process, the sensor value collected by the weight sensing device 6 (weight sensor) in real time each time is combined with the numerical values of the parameters k and b, so that the total weight of the existing goods on each rack can be calculated.

The pick or place status judgment unit 303 is configured to determine whether the weight sensing value of each rack changes. If the weight sensing value of a rack becomes smaller, it determines that goods are taken away from the rack; if the weight sensing value of the rack becomes larger, it is determined that there are articles placed on the rack; if the weight sensing value of the rack does not change, it means that there is no change at all for the goods on the shelf, and the value acquisition unit 302 performs real-time acquisition again. The pick or place status judgment unit 303 includes a weight difference calculation unit 3031, a weight difference judgment unit 3032, and a rack information recording unit 3033.

The weight difference calculation unit 3031 calculates a difference value between the real-time weight sensing value of each rack acquired in real time and the weight sensing value of the same rack stored in the goods database, and records the difference value as the weight difference value of each rack. For example, in the above example, if the weight of the rack on which the beverage of a certain brand is placed changes to 1300g or 1900g, the weight difference will be recorded as -400g or 200g, respectively.

The difference value judgment unit 3032 compares the weight difference value of at least one rack with 0; when the weight difference value of one rack is less than 0, it determines that goods are taken away from the rack; when the weight difference value of the rack is greater than 0, it determines that there are articles placed on the rack, but it cannot be determined whether the articles are the ones that are taken by the user from the shelf before, and they can also be the personal belongs of the user or other goods. For example, in the foregoing example, a weight difference of -400g can be considered as a removal of the goods; and in the case where the weight difference is 200 g, it is determined that there are articles placed on the shelf.

When the weight difference of a rack is greater than 0 or less than 0, the rack information recording unit 3033 records the rack number of the rack and the weight difference of the rack. For example, if the weight difference in the previous example is - 400 g, the weight of the shelf is known to be decreased and the shelf number is recorded (1-12). If the weight difference value in the previous example is 200 g, as the weight sensing value of the rack in the initial state is known to be 1700 g, the articles placed on the rack are not necessarily the goods originally on the shelf, thereby the goods are likely to be the goods originally belonging to other racks or the articles carried by the user, and an alarm signal can be selectively generated to remind the manager or the user, and if necessary, the rack number of the rack can be displayed on a certain display for the manager or the user to process in time.

The pick or place status judgment unit 303 further includes a goods type determining unit 3034 and a goods quantity calculating unit 3035. When the weight difference of one rack is less than 0, the goods type judgment unit 3034 determines the type of the taken goods according to the rack number and the goods information corresponding to the rack stored in the goods database. For example, if the number of the rack is known as (1-12), if only one kind of goods is placed on each rack, the kind of the goods can be determined to be a certain herbal tea, and other goods information such as a weight value of a single product (200 g), a net content (195 ml), a place of origin (Guangdong), a unit price (5 yuan) and the like can be correspondingly found. If the rack is used for placing various goods, the possible types and the quantity of the taken goods can be determined preliminarily according to the weight difference value.

When the weight difference of one rack is less than 0, if only one kind of goods is placed on each rack, the goods quantity calculation unit 3035 calculates the ratio of the absolute value of the weight difference of one rack to the weight value of a single goods on the rack stored in the goods database, and the ratio is rounded by using a rounding method, and the obtained integer is the quantity of the taken goods. For example, the weight difference in the previous example, 400 grams, with an absolute value of 400 grams, the ratio of this value to the weight of a single item (200 grams) is 2, and thus 2 is the quantity of the goods removed. Because a small weight difference value may exist among a plurality of goods of the same type, the ratio after direct calculation is not necessarily an integer and may approach to a certain integer, so that a rounding processing needs to be performed on the ratio by utilizing a rounding method, and the type and the quantity of the taken goods can be determined.

In an ideal state, if the user is a person of high integrity, the goods can be correctly put back to the original shelf every time the goods are put back. When the weight difference of a rack is greater than 0, the goods type judgment unit 3034 determines the type of the goods to be returned according to the rack number and the goods information corresponding to the rack. The goods quantity calculating unit 3035 calculates the ratio of the absolute value of the weight difference of the rack to the weight value of the goods corresponding to the rack, and performs a rounding processing on the ratio by using a rounding method, so that the obtained integer is the number of the goods to be placed back.

The goods database updating unit 304 is configured to store the real-time weight sensing value in the goods database, and form a new weight sensing value to update the weight sensing value of each rack in the goods database for next calling and determination.

The goods perception system based on weight monitoring 300 of this example has the advantages of providing a weight monitoring-based goods perception scheme, which can monitor the real-time weight sensing value of the goods on the shelf in real time, sense the weight change of each rack in real time, deduce which kind of goods is taken away or put back according to the weight change of all racks on the shelf, and determine the kind and quantity of the taken away or put back goods.

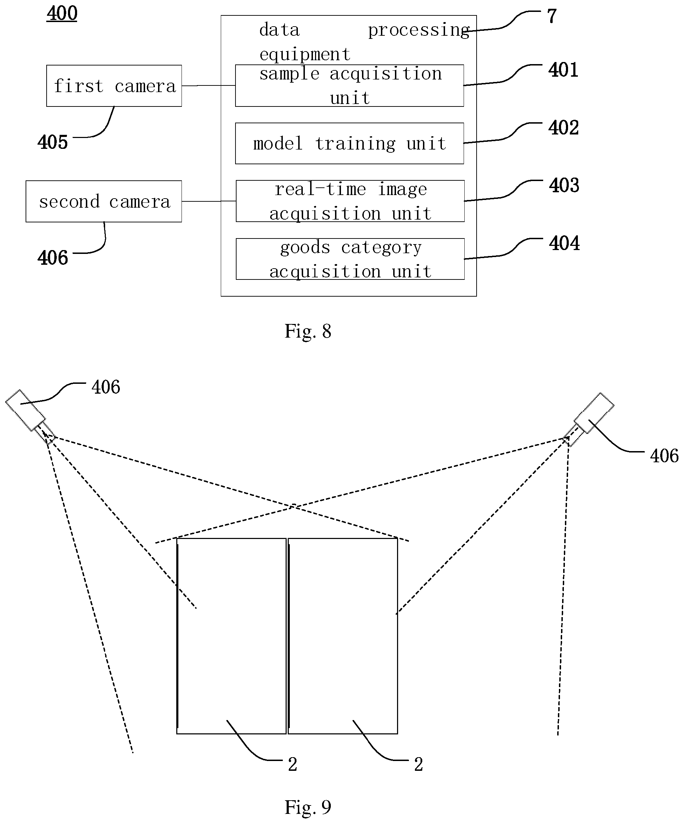

Referring to FIG. 8, the example further includes a goods perception system based on image monitoring 400, which includes a sample acquisition unit 401, a model training unit 402, a real-time image acquisition unit 403, and a goods category acquisition unit 404, wherein the four units are function modules in the data processing equipment 7, and the goods perception system based on image monitoring 400 can monitor the real-time image of the front area of the shelf, and determine the category of the goods that are taken away or replaced.

The image-monitoring-based goods perception system 400 further includes a first camera 405 and a second camera 406, wherein the first camera 405 is connected to the sample acquisition unit 401 and is used for shooting pictures of each goods at multiple angles and/or multiple distances. The second camera 406 is connected to the real-time picture acquisition unit 403 for taking a real-time picture of the space in front of the shelf.

Referring to FIG. 9, the number of the second cameras 406 is two or four, and the second cameras 406 are disposed outside the shelf 2, and each of the second cameras 406 faces one corner of the shelf 2. The foremost ends of the plurality of racks 5 of the shelf 2 are located on the same plane, the plane is called a shelf plane, the second camera 406 is provided with a lens, and the field of view of the lens covers the space in front of the shelf; when the goods are taken down from the shelf or placed on the shelf, the images of the taking down process or the putting back process of the goods are shot by the second camera. The space in front of the shelf is a space area corresponding to the plane of the shelf in front of the shelf, the space in front of the shelf generally refers to an area of a range 30-50 cm wide in front of the shelf, and the lens of each second camera 406 faces the central area of the space in front of the shelf.

In an example, the included angle between the central axis of the lens of the second camera 406 and the horizontal plane is 30-60 degrees; and/or the distance between the lens of the second camera 406 and the upper end or the lower end of the shelf 2 is 0.8-1.2 m; and/or the distance between the lens of the second camera 406 and one side edge of the shelf 2 is 0.8-1.2 m, thereby the field of view of the second camera 406 can completely cover the space in front of the shelf, and when the goods are removed from the shelf 2 or placed on the shelf 2, the image of the removing process or the placing process is shot by the second camera 406.

The sample acquisition unit 401 is used for acquiring at least one group of picture samples, wherein each group of picture samples comprises a plurality of sample pictures of a goods at multiple angles; and a group of picture samples of the same kind of goods is provided with the same group identification, and the group identification represents the kind of the goods corresponding to the group of picture samples. In an example, the first camera 405 needs to take 3000 to 5000 pictures at different angles and different distances for each kind of goods on the shelf 2, and transmits the pictures to the sample collection unit 401 of the data processing equipment 7. Because the goods sold in the unmanned supermarket related to the example are standard goods, and the six-surface views of the goods of the same type are the same or similar, the sampling of the training samples of the goods of the same type can be completed only by selecting one or more products from the goods of the same type and photographing the products for multiple times.

The model training unit 402 is configured to train a Convolutional Neural Network (CNN) model according to each sample picture in the plurality of sets of picture samples and the group identifier of each sample picture, and obtain a goods identification model. The convolutional neural network model in this example is a faster RCNN network model with the smallest computation amount and the fastest response speed at present, and the fastest response speed of the model is only about 0.2 seconds, thereby the type and the quantity of the goods of the picture can be accurately identified in a very short time.

The real-time picture acquisition unit 403 is connected to the plurality of second cameras 406, and is configured to continuously capture at least one real-time picture of the space in front of the shelf, where each real-time picture includes part or all of one or more goods pictures. When the user takes the goods from a rack of the shelf or when the user places the goods or articles on a rack of the shelf, the second camera 406 may take a whole or partial picture of the goods in front of the shelf from different angles and display the shape, pattern and color of the goods.

The goods category acquisition unit 404 is configured to obtain a type of the goods displayed in the real-time picture according to the real-time picture and the goods identification model. The real-time picture acquisition unit 403 pre-processes a plurality of real-time pictures collected in a certain period and inputs the processed pictures into the goods identification model, so as to determine the group identifier corresponding to the pictures in the period, and determine the type of the goods shot in the period according to the group identifier.

The goods perception system based on image monitoring 400 has the advantages that the image of the space in front of the shelf can be monitored in real time, whether the goods are taken from the shelf or put back to the shelf is determined, the probability conclusion of the type and the quantity of the goods is deduced by using the convolution algorithm in machine learning, and the result of the highest reliability is selected as the final conclusion.

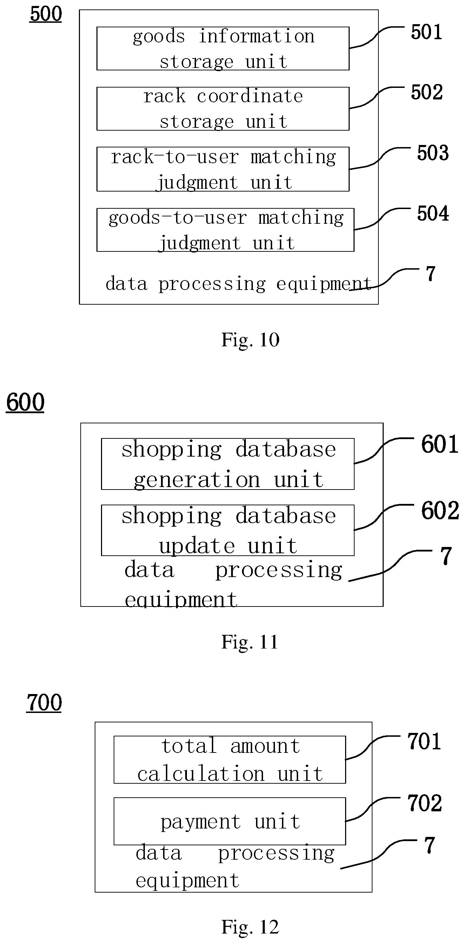

Referring to FIG. 10, the example further includes a shopping user judgement system 500, which is a functional module in the data processing equipment 7, for determining the user identity of the goods taken or put back according to the identity information of the user and the real-time location of the user when any kind of goods is taken or put back. The shopping user judgment system 500 includes a goods information storage unit 501, a rack coordinate storage unit 502, a rack-to-user matching judgment unit 503, and a goods-to-user matching judgment unit 504.

The goods database generated or updated by the goods database generation unit 301 and the goods database update unit 304 in the goods perception system based on weight monitoring 300 is stored in the goods information storage unit 501, and the goods database includes each piece of goods information; the goods information comprises the goods name, the model, the net content, the unit price and the like of each goods, and further comprises the shelf number for placing the goods, the rack number for placing the goods and the goods serial number.

The target positioning system 200 establishes a 3D coordinate system in the closed space, and since the positions of the shelves 2 and the racks 5 are determined, the coordinates of each shelf 2 and each rack 5 can be obtained after the coordinate system is established, groups of the shelf coordinates and the rack coordinates are stored in the rack coordinate storage unit 502, and the height (for example, 30 CM) of the rack space above the rack for placing the goods is set, so that a group of coordinates of the rack space can be obtained.

The target coordinate acquisition unit 203 may obtain a real-time group of coordinates of each user's hand, and when there is an intersection between the group of coordinates of the rack space above a rack 5 and the group of coordinates of a user's hand, the shelf-to-user matching determining unit 503 determines that the rack 5 matches the user, and may consider that the user stretches the hand into the shelf space above the shelf 5, and the user may take away or put back the goods.

The goods perception system based on weight monitoring 300 monitors the real-time weight sensing value of each shelf 5, and the goods perception system based on image monitoring 400 monitors the real-time image of the front area of each shelf, and the two goods perception systems work cooperatively to determine whether goods are taken away or put back, and determine the type and quantity of the taken away or put back goods. When goods are removed from or placed on a shelf and a user matches the shelf at the same time, the goods-to-user matching judgment unit 504 determines that the goods match the user, and the goods are removed from or placed on the shelf by the user at this time, thereby determining the identity of the user.

Referring to FIG. 11, the example further includes a shopping information recording unit 600, which is a functional module in the data processing equipment 7, for generating at least one shopping database according to the identity information of each user, so as to record the category and quantity of at least one item taken by each user. The shopping information recording unit 600 includes a shopping database generation unit 601 and a shopping database update unit 602.

When the identity of a user is recognized by the user identification system 100, the identity acquisition unit 1022 acquires the identity information of the user, and the shopping database generation unit 601 generates the shopping database of the user in the data processing equipment 7 according to the identity information of the user, and the shopping database in the initial state has no shopping information. When any one of the goods matches a user, the user is indicated to take a shopping action, and the goods are taken from a rack or placed on the rack.

If the goods perception system based on weight monitoring 300 monitors that the real-time weight sensing value of a rack 5 is decreased, indicating that goods are taken away from the shelf, the goods type determining unit 3034 initially determines possible types and quantities of the taken goods according to the goods information stored in the goods database and the shelf number with the weight difference value less than 0. If the rack is misplaced with other kinds of goods besides the original goods, it cannot determine the specific type and quantity of the taken goods only by the weight difference value, thereby only the possible type and quantity of the taken goods can be determined preliminarily according to the weight difference value. For example, if the weight difference of the racks is -100 g, and the weight of one of the original goods P on the rack is 50 g, but the user misplaces one of the goods Q on the other racks, and the weight of one of the goods Q is 100 g, the result of the preliminary determination at this time is that the taken goods are two pieces of goods P or one piece of the goods Q.

When the goods matches a user, the goods perception system based on image monitoring 400 monitors the real-time image of the user taking the goods away from the shelf, determines the kind of the taken goods again; and if the determination result is in accordance with one of the preliminary determination results, it confirms the type and the quantity of the taken goods, and the shopping database updating unit 602 generates goods taking information including the type and the quantity of the taken goods and the goods information of the goods, and writes the shopping information corresponding to the goods taking information into the shopping database of the user, so that the type and the quantity of the goods in the shopping database are in accordance with the type and the quantity of the goods actually purchased by the user.

The shopping database updating unit 602 generates a set of shopping information including the type and quantity of the goods removed at the moment and the goods information of the goods, such as the name, model, net content, unit price, etc., according to the type and the quantity of the goods removed and the identity information of the user who removes the item, and stores the set of shopping information in the shopping database of the user. After the user takes away goods in the closed space 1 for many times, a plurality of groups of shopping information are included in the shopping database, and the mobile communication terminal carried by the user is connected with the data processing equipment 7 in a wireless communication mode and carries out data exchange, so the shopping information in the shopping database can also be displayed on an APP interface of the mobile communication terminal of the user.

When the goods match a user, if the real-time weight sensing value of a rack 5 is monitored to be increased by the goods perception system 300 based on weight monitoring, the weight difference value of the shelf is greater than 0, which indicates that the articles are placed on the shelf, and it can be determined that whether the articles are purchased goods or not.

The shopping information in the shopping database of the user is inquired, and whether the weight value of the purchased goods match the weight difference value of the rack is determined, that is, determining whether the total weight of one or more purchased goods is the same as the weight difference value of the rack. If so, the possible types and the quantity of the goods can be preliminarily determined. For example, if the weight difference of the rack is 200 g, and there are two goods A of 100 g and four goods B of 50 g in the purchased goods, it can be determined primarily that the goods placed back to the rack are two pieces of goods A, or one piece of the goods A and two pieces of goods B, or four pieces of goods B.

When the goods match a user, the goods perception system based on the image monitoring 400 monitors the real-time image of the user putting the goods back to the rack, determines the type of the put-back goods again, and if the determination result is in accordance with the preliminary determination result, confirms the kind and the quantity of the put-back goods; the shopping database updating unit 602 generates return information including the kind and the quantity of the put-back goods and the goods information of the goods, and deletes the shopping information corresponding to the return information from the shopping database of the user, so that the type and the quantity of the goods in the shopping database are in accordance with the type and the quantity of the goods purchased by the user.

Similarly, the goods perception system based on weight monitoring 300 and the goods perception system based on image monitoring 400 can also determine the type and the quantity of the goods to be put back, further, the goods perception system can also determine whether the type of the goods to be put back is consistent with the type of the original goods on the rack with the increased real-time weight sensing value, and if not, an alarm signal can be selectively generated to remind a manager or a user. Meanwhile, the goods perception system records the number of the rack and records the type and weight information of the goods which are misplaced, then, if the weight sensing value of the rack is monitored to be reduced by the goods perception system based on weight monitoring 300, the possible type and quantity of the goods which are misplaced are preliminarily determined according to the weight difference value, the type and weight information of the goods which are misplaced and the type and weight information of the original goods on the rack; and the goods perception system based on image monitoring 400 determines again by using a real-time image, so that the type and quantity of the goods which are misplaced can be confirmed.

If the goods perception system based on image monitoring 400 is not consistent with the determination result of the weight-based monitoring system 300 or the type of the returned goods cannot be determined, it can be determined that the articles returned to the rack are not the existing goods in the self-service supermarket, and may be the personal belongs carried by the user, such as an umbrella, a mobile phone, etc., and an alarm signal can be selectively generated to remind the manager or the user, and if necessary, the rack number of the rack can be displayed on a display for the manager or the user to process in time.

Referring to FIG. 12, the example further includes a settlement system 700, which is a functional module in the data processing equipment 7, for settling a fee according to the type and quantity of all goods in the shopping database of the user. After the shopping process of the user is finished, the user can leave the closed space 1 from the entrance guard device of the entrance. When the image sensor 2011 of the target positioning system 200 cannot acquire the real-time 3D image of the user, it can be determined that the user has finished shopping, and the settlement system 700 settles the fee for the user.

The settlement system 700 includes a total amount calculation unit 701 and a payment unit 702. When the user leaves the closed space, the total amount calculation unit 701 calculates the total amount according to the type and the quantity of all the goods in the shopping database of the user, and since the unit price of each type of goods is pre-stored in the data processing equipment 7 as goods information, the sum of the products of the unit prices and the corresponding quantity of various goods is the total amount that the user needs to pay. Further, in other examples, the user may enjoy discounts on goods or use coupons, etc. for which the total amount the user needs to pay is the sum of the products of the various unit prices and quantities of the goods minus the coupon and/or coupon amount and/or the discount amount. The payment unit 702 is payment software or third party payment software provided by the settlement system 700, and can deduct money from the bank account or the electronic account of the user, and the deducted money amount is the same as the total amount that the user needs to pay.

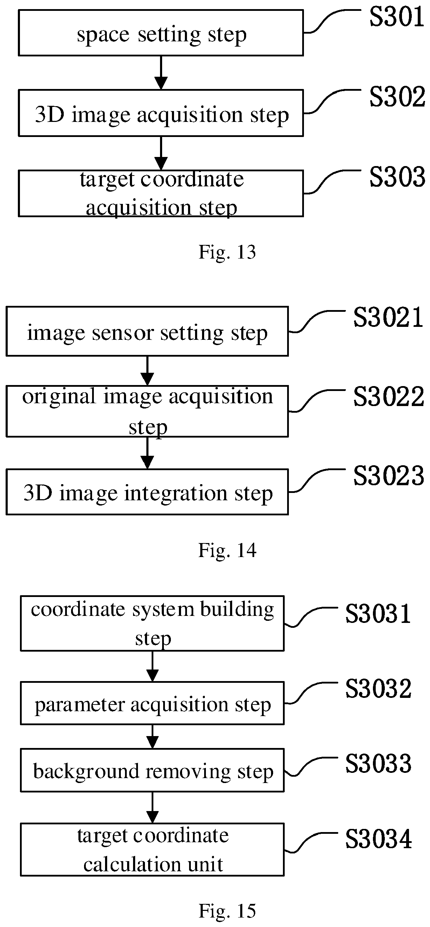

The example also provides a target positioning method, that is, an implementation method of the target positioning system. Referring to FIG. 13, the target positioning method includes the following steps S301) to S303). The technical effect is that a plurality of image sensors are used to monitor a moving image of a user in a closed space in a whole course, a position of a target (user) in the closed space is determined in real time, a movement track of the user in the closed space is tracked, and a group of 3D coordinates of a body of the user and a part (such as a head, a hand, etc.) of an extension portion thereof is acquired.

Step S301): a space setting step, setting one or more access ports in the closed space, wherein the user must enter and exit the unmanned supermarket through the access ports.

Step S302): a 3D image acquisition step, which is used for acquiring at least one frame of 3D image in real time, wherein the 3D image comprises all or part of images of at least one target object. Referring to FIG. 14, the step S302) of acquiring the 3D image includes the following steps: step S3021) an image sensor setting step, setting a plurality of image sensors at the top of the closed space, wherein the lenses of the image sensors face downward, and the field of view of the plurality of image sensors cover the entire bottom surface of the closed space. Each of the image sensors 2011 includes a depth image sensor 2012 and an RGB image sensor 2013 set in parallel. Step S3022) an original image acquisition step, for synchronously acquiring at least one frame of depth image and at least one frame of RGB image in real time. Step S3023) a 3D image integration step, combining the depth image and the RGB image acquired by the same image sensor at the same time into a frame of 3D image; repeating the step of collecting the original image and the step of integrating the 3D images in step S3022, and continuously integrating the multi-frame 3D images. During shopping of the user in an unmanned supermarket, the image sensor 3031 can acquire the multi-frame 3D images of the whole of the user and the motion track of the user in the closed space. When the identity of a user is identified, the user is positioned at the gate of the access of the closed space, and an image sensor opposite to the access starts to acquire real-time 3D images near the gate, including the whole 3D image of the user. When the user travels or resides in the closed space, no matter which position the user walks to, at least one lens of the image sensors positioned at the top of the closed space can face the user, and the whole monitoring process is continued until the user leaves the closed space from the gate of a certain access. A plurality of image sensors simultaneously acquire real-time 3D images, and each real-time 3D image comprises the 3D image of the user.

And step S303): a target coordinate acquisition step, wherein the target object is a certain user, a 3D coordinate system is established in the closed space, and coordinates or a group of coordinates of a user are obtained in real time according to the at least one frame of 3D image. When the 3D coordinate system is established, theoretically, any point of the closed space can be used as the origin of the coordinate system, the 3D coordinate system is established in the closed space, and coordinates or a group of coordinates set of a user are acquired in real time according to the at least one frame of 3D image.

Referring to FIG. 15, step S303) the target coordinate acquisition step includes step S3031) a coordinate system building step, step S3032) a parameter acquisition step, step S3033) a background removing step, and step S3034) a target coordinate calculating step. Step S303) can be used to obtain a group of 3D coordinates of the user body and a portion of its extension (e.g., head, hand, etc.).

Step S3031): The coordinate system building step, which is used for establishing a 3D coordinate system in the closed space. For example, a center point of the bottom surface of the closed space (the ground surface of the unmanned supermarket) is selected as the origin of the coordinate system. An X axis and a Y axis are set in the horizontal direction, and a Z axis is set in the vertical direction.

Step S3032): The parameter acquisition step, which is used for acquiring the position parameters and color parameters of each pixel point of each frame of 3D image; the position parameters are x, y and z, and represent the coordinates of the pixel point under the 3D coordinate system; the color parameters are r, g and b, and respectively represent the three primary color intensities of the pixel point. When a user moves into the field of view of any image sensor, the data processing equipment can acquire multi-frame 3D images, each frame of 3D image comprising a user image and a background image, and each pixel point can be a part of the user or a part of the background.

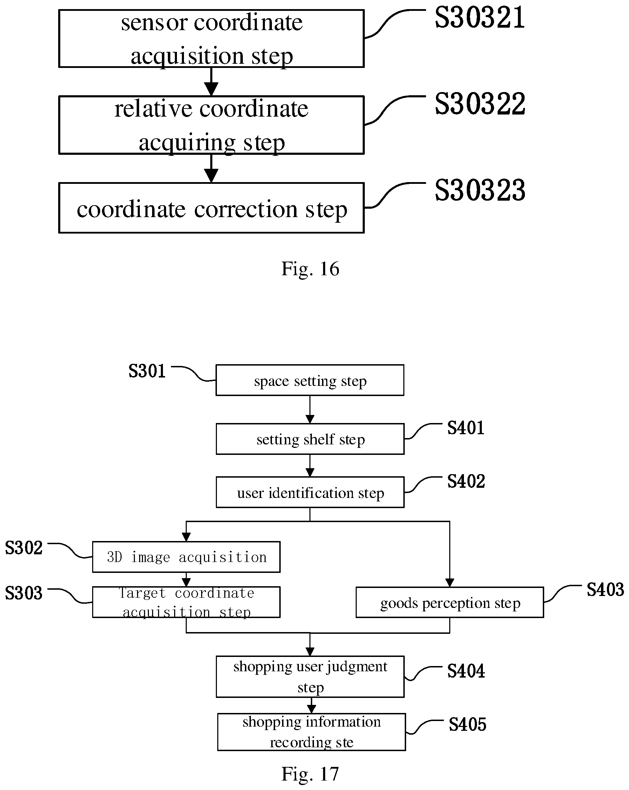

Referring to FIG. 16, step S3032) the parameter acquisition step, which is used for obtaining the position parameters of each pixel of a frame of 3D image, specifically includes the following steps S30321) to S30323). Step S30321) a sensor coordinate acquisition step for acquiring the coordinates of the center point of the image sensor (the midpoint of the connecting line of the depth sensor and the lens center point of the RGB sensor which are arranged in parallel) that acquires the frame of 3D image, in the 3D coordinate system. And step S30322) a relative coordinate acquisition step, which is used for establishing a second 3D coordinate system by taking the central point of the image sensor as a second origin, and acquiring the coordinates of each pixel point under the second 3D coordinate system from the 3D image. And step S30323) a coordinate correction step, which is used for calculating and correcting the coordinate of each pixel point of the 3D image under the 3D coordinate system according to the coordinates of the central point of the image sensor under the 3D coordinate system and the coordinates of each pixel point of the 3D image under the second 3D coordinate system, so as to obtain the position parameters of each pixel point.

And S3033): the background removing step, in the continuously collected M frames of 3D images, if the color parameters of N pixel points which belong to different 3D images and have the same position parameters are the same, and N is greater than 0.9 ^{∗}M and less than or equal to M, the N pixel points are determined to be background pixel points, and the N background pixel points are removed from the M frames of 3D images to obtain M frames of background-free 3D images, namely the image of a certain user. In the continuously acquired 3D images, if the color parameters of the pixel points which belong to different 3D images and have the same position parameters are the same, or most of the color parameters (such as 90%) are the same, the position of the pixel point can be determined as the background, so that the pixel points can be removed from the corresponding 3D images. In the continuously acquired 3D images, after the background pixel points in each 3D image are removed, the remaining set of the pixel points can represent the whole travel track of the user.

Step S3034): the target coordinate calculation step, wherein the set of the position parameters of all the pixel points in the M frames of the background-free 3D images is the group of coordinates of the whole user; in the group of coordinates, the position parameters of the pixel point with the largest position parameter z is defined as the coordinates of the target object. If the target object is further defined as the hand of the user, a real-time group of coordinates of the hand of the user can be acquired.

Referring to FIG. 17, the target positioning method may further include step S401) a setting shelf step, step S402) a user identification step, step S403) a goods perception step, step S404) a shopping user judgment step, and step S405) a shopping information recording step.

Step S401), step S402) are executed after step S301) and before step S302). Step S401): the setting shelf step sets at least one shelf in the closed space; each shelf includes at least one rack, and at least one kind of goods is placed on each rack. Step S402): the user identification step identifies the identity information of each user entering the closed space.

Step S403): the goods perception step for sensing the picking and placing states of each good in real time, and when any goods is taken away or placed back, acquiring the type and quantity of the taken away or placed back goods. Step S403), step S302) and step S303) are respectively executed without mutual interference. The real-time goods picking and placing states and the real-time coordinates of the target object are sent to the data processing equipment 7 for further shopping user determination.

Step S404): the shopping user judgment step, when any goods are taken away or put back, the shopping user judgment step is used for determining the identity of the user who takes away or puts back the goods according to the identity information of the user and the real-time position of the user; step S405): the shopping information recording step, generating at least one shopping database according to the identity information of each user, for recording the type and quantity of at least one item taken by each user.

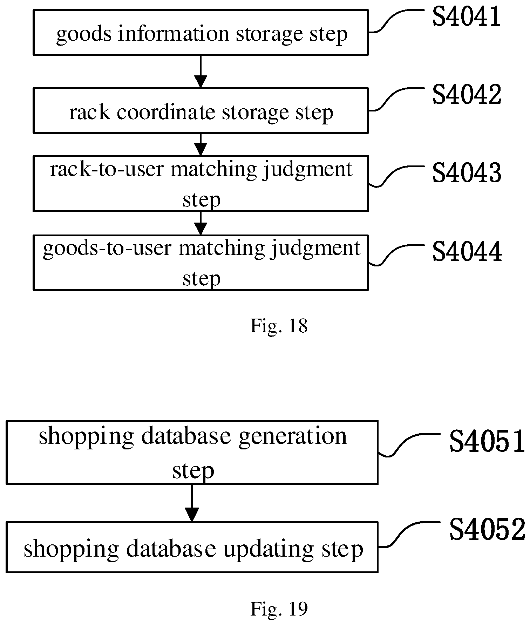

Referring to FIG. 18, wherein the step S404) includes step S4041) a goods information storage step, step S4042) a rack coordinate storage step, step S4043) a rack-to-user matching judgment step, and step S4044) a goods-to-user matching judgment step.

Step S4041): the goods information storage step for storing a goods database including each goods information; step S4042): the rack coordinate storage step for establishing a 3D coordinate system in the closed space for storing shelf coordinates and rack coordinates, setting the height of the rack space above the rack, and acquiring the group of coordinates of the rack space; step S4043): the rack-to-user matching judgment step for determining, when there is an intersection between the group of coordinates of the rack space above the rack and the group of coordinates of the hand of the user, the rack matches the user; step S4044) the goods-to-user matching judgment step for determining the goods match the user when the goods are taken from or placed on a shelf and the user matches the shelf at the same time. The group of coordinates of the shelf space above each shelf for placing goods may be determined under the 3D coordinate system established in the closed space, each shelf number corresponding to the group of coordinates of one shelf space. When there is an intersection between the group of coordinates of the hand of the user and the group of coordinates of the rack space, it is indicated that the hand of the user extends into the space above a rack, that is, the rack matches the user. If the goods perception system finds that the goods are taken from or placed on the rack, it can be determined that the goods taking event or the goods returning event occurs by the user.

Referring to FIG. 19, step S405) includes the step S4051) a shopping database generation step and the step S4052) a shopping database updating step. Step S4051): the shopping database generation step, when the identity of a user is identified, generates the shopping database of the user according to the identity information of the user; step S4052) the shopping database updating step, when the goods are taken away, generates the shopping information according to the type and quantity of the taken goods and the identity information of the user who takes away the goods, and stores the shopping information in the shopping database of the user; when the goods are put back, generates return information according to the type and the quantity of the put-back goods and the identity information of the user who puts back the goods, and deletes the shopping information corresponding to the return information from the shopping database of the user.

And step S301) to step S303) can acquire the whole and local real-time positions of the user, and the identity of the user who takes away or puts back the goods can be determined when the goods on the shelf are taken or put back, and the shopping record in the shopping database of the user is corrected in time. If the goods perception system finds that the goods are taken away from a rack by a certain user and determines the type and quantity of the taken goods, the goods information, quantity, unit price and other information of the taken goods can be written into the shopping database of the user. If the goods perception system finds that the goods are placed on a rack by a certain user and determines the type and the quantity of the placed goods, the return information of the placed goods can be deleted from the shopping database of the user.

When a user carries out shopping activities in a closed space, multiple goods taking events and multiple returning events may occur; after each event occurs, a shopping database of the user correspondingly changes, thereby shopping information recorded in the shopping database can be consistent with actual shopping content of the user, and when the user leaves the closed space, a settlement system can automatically complete settlement for the user.

The disclosure has the following advantages: it provides a target positioning system and a target positioning method, which can acquire the real-time position of a specific target object in a specific area, particularly the real-time position of each user in an unmanned supermarket, and it can accurately determine the identity of the user that takes away or puts back goods from or on the shelf by combining the position of each rack or goods and the picking and placing states of each goods on the shelf, thereby updating the shopping record of the user so as to realize automatic settlement after the user finishes shopping.

The foregoing are only some embodiments of the present disclosure which illustrate to those skilled in the art how to practice the disclosure. They are not intended to limit the scope of the disclosure. Those skilled in the art will appreciate that various modifications and adaptations can be made without departing from the principles of the present invention, and such modifications and adaptations should be considered as within the scope of the disclosure.

## Claims

1. A target positioning system, comprises:
a closed space;
a 3D image acquisition device for acquiring at least one frame of 3D image in real time, wherein the 3D image comprises all or part of images of at least one target object; and
a target coordinate acquisition unit in a data processing equipment, for establishing a 3D coordinate system in the closed space, and acquiring coordinates or a group of coordinates of the target object in the 3D coordinate system in real time according to the at least one frame of 3D image.

2. The target positioning system according to claim 1, wherein the 3D image acquisition device comprises:
at least one image sensor at a top of the closed space, wherein a field of view of the image sensor covers a whole bottom surface of the closed space;
wherein each image sensor comprises:
a depth image sensor for acquiring at least one frame of depth image of a target object;
an RGB image sensor for acquiring at least one frame of RGB image of the target object; and
a 3D image integration unit for combining a frame of depth image and a frame of RGB image acquired by the image sensor at a same time into a frame of 3D image.

3. The target positioning system according to claim 1, wherein the target coordinate acquisition unit comprises:
a coordinate system building unit for establishing the 3D coordinate system in the closed space by selecting any point in the closed space as an origin, setting an X axis and a Y axis in a horizontal direction, and setting a Z axis in a vertical direction;
a parameter acquisition unit for acquiring position parameters and color parameters of each pixel point of each frame of 3D image, wherein the position parameters are x, y and z, and represent coordinates of a pixel point in the 3D coordinate system; and the color parameters are r, g and b, and respectively represent intensities of three primary colors of the pixel point;
a background removal unit for, in continuously acquired M frames of 3D images, if color parameters of N pixel points which belong to different 3D images and have the same position parameters are the same, and N is greater than 0.9^{∗}M and less than or equal to M, determining the N pixel points as background pixel points and removing the N background pixel points from the M frames of 3D images to obtain M frames of background-free 3D images; and
a target coordinate calculation unit for obtaining a set of position parameters of all pixel points in the M frames of background-free 3D images as the group of coordinates of the target object.

4. The target positioning system according to claim 3, wherein the parameter acquisition unit comprises:
a sensor coordinate acquisition unit for acquiring coordinates of a central point of the image sensor that acquires the frame of 3D image in the 3D coordinate system;
a relative coordinate acquisition unit for establishing a second 3D coordinate system by using the central point of the image sensor as a second origin, and acquiring coordinates of each pixel point in the second 3D coordinate system from the 3D image; and
a coordinate correction unit used for calculating and correcting the coordinates of each pixel point of the 3D image in the 3D coordinate system according to the coordinates of the central point of the image sensor in the 3D coordinate system and the coordinates of each pixel point of the 3D image in the second 3D coordinate system, so as to obtain the position parameters of each pixel point.

5. The target positioning system according to claim 1, further comprising:
at least one shelf in the closed space, wherein each shelf comprises at least one rack, and at least one goods is placed on each rack;
a user identification system for identifying identity information of each user entering the closed space;
a goods perception system for sensing picking and placing states of each goods in real time, and when any goods are taken away or placed back, acquiring a type and quantity of the taken or placed goods;
a shopping user judgment system for determining an identity of a user who takes or puts back goods according to the identity information of each user and a real-time position of each user when any goods are taken or put back; and
a shopping information recording unit for generating at least one shopping database according to the identity information of each user, and recording a type and quantity of at least one goods taken by each user.

6. The target positioning system according to claim 5, wherein the shopping user judgment system comprises:
a goods information storage unit for storing a goods database comprising goods information of each goods;
a rack coordinate storage unit configured to establish a 3D coordinate system in the closed space, for storing a group of shelf coordinates and a group of rack coordinates, setting a height of rack space above the rack, and acquiring a group of coordinates of the rack space;
a rack-to-user matching judgment unit for determining that a rack matches a user when there is an intersection between the group of coordinates of the rack space above the rack and a group of coordinates of a hand of the user; and
a goods-to-user matching judgment unit for determining that the goods match the user when the goods are taken from or placed on the rack and the user matches the rack at the same time.

7. The target positioning system according to claim 5, wherein the shopping information recording unit comprises:
a shopping database generation unit for generating a shopping database of the user according to identity information of the user when the identity of the user is identified; and
a shopping database update unit for generating, when the goods are taken away, shopping information according to a type and quantity of the taken goods and the identity information of the user who takes the goods, and storing the shopping information in the shopping database of the user; and generating, when the goods are put back, return information according to a type and quantity of the put-back goods and the identity information of the user who puts back the goods, and deleting the shopping information corresponding to the return information from the shopping database of the user.

8. A target positioning method, comprising:
a space setting step for setting a closed space;
a 3D image acquisition step for acquiring at least one frame of 3D image in real time, wherein the 3D image comprises all or part of images of at least one target object; and
a target coordinate acquisition step for establishing a 3D coordinate system in the closed space, and acquiring coordinates or a group of coordinates of the target object in real time according to the at least one frame of 3D image.

9. The target positioning method according to claim 8, wherein the 3D image acquisition step comprises:
an image sensor setting step for setting at least one image sensor at a top of the closed space, wherein a field of view of the image sensor covers a whole bottom surface of the closed space;
an original image acquisition step for synchronously acquiring at least one frame of depth image and at least one frame of RGB image in real time; and
a 3D image integration step for combining a frame of depth image and a frame of RGB image which are acquired by a same image sensor at a same time into a frame of 3D image.

10. The target positioning method according to claim 8, wherein the target coordinate acquisition step comprises:
a coordinate system building step for establishing the 3D coordinate system in the closed space by selecting any point in the closed space as an origin, setting an X axis and a Y axis in a horizontal direction, and setting a Z axis in a vertical direction;
a parameter acquisition step for acquiring position parameters and color parameters of each pixel point of each frame of 3D image, wherein the position parameters are x, y and z, and represent the coordinates of a pixel point in the 3D coordinate system; and the color parameters are r, g and b, and respectively represent intensities of three primary colors of the pixel point;
a background removing step for determining, in continuously acquired M frames of 3D images, if color parameters of N pixel points which belong to different 3D images and have the same position parameters are the same, and N is greater than 0.9 ^{∗}M and less than or equal to M, the N pixel points as background pixel points and removing the N background pixel points from the M frames of 3D images to obtain M frames of background-free 3D images; and
a target coordinate calculation step for obtaining a set of position parameters of all pixel points in the M frames of background-free 3D images as the group of coordinates of the target object.

11. The target positioning method according to claim 10, wherein in the parameter acquisition step, acquiring the position parameters of each pixel point of the frame of 3D image comprises:
a sensor coordinate acquisition step for obtaining coordinates of a central point of the image sensor that acquires the frame of 3D image in the 3D coordinate system;
a relative coordinate acquisition step for establishing a second 3D coordinate system by using the central point of the image sensor as a second origin, and acquiring coordinates of each pixel point in the second 3D coordinate system from the 3D image; and
a coordinate correction step for calculating and correcting the coordinates of each pixel point of the 3D image in the 3D coordinate system according to the coordinates of the central point of the image sensor in the 3D coordinate system and the coordinates of each pixel point of the 3D image in the second 3D coordinate system, thereby obtaining the position parameters of each pixel point.

12. The target positioning method according to claim 8, further comprising
a shelf setting step for setting at least one shelf in the closed space, wherein each shelf comprises at least one rack, and at least one goods are placed on each rack;
a user identification step for identifying identity information of each user entering the closed space;
a goods perception step for sensing picking and placing states of each goods in real time, and when any goods are taken away or placed back, acquiring a type and quantity of the taken away or placed back goods;
a shopping user judgment step for determining, when any goods are taken away or put back, an identity of a user who takes away or puts back the goods according to the identity information of each user and a real-time position of each user; and
a shopping information recording step for generating at least one shopping database according to the identity information of each user, so as to record a type and quantity of at least one goods taken by each user.

13. The target positioning method according to claim 12, wherein the shopping user judgment step comprises:
a goods information storage step for storing a goods database which comprises information of each goods;
a rack coordinate storage step for establishing a 3D coordinate system in the closed space, storing a group of shelf coordinates and a group of rack coordinates in the 3D coordinate system, setting a height of rack space above the rack, and acquiring a group of coordinates of the rack space;
a rack-to-user matching judgment step for determining that a rack matches the user when there is an intersection between the group of coordinates of the rack space above the rack and a group of coordinates of a hand of the user; and
a goods-to-user matching judgment step for determining, when the goods are taken from or placed on the rack, and the user matches the rack at the same time, that the goods match the user.

14. The target positioning method according to claim 12, wherein the shopping information recording step comprises:
a shopping database generation step for generating, when the identity of the user is identified, a shopping database of the user according to identity information of the user;
a shopping database updating step for generating, when the goods are taken away, shopping information according to a type and quantity of the taken goods and the identity information of the user who takes away the goods, and storing the shopping information into the shopping database of the user; and for generating, when the goods are put back, return information according to a type and quantity of the put-back goods and the identity information of the user who puts back the goods, and deleting the shopping information corresponding to the return information from the shopping database of the user.
